# EUROPEAN PATENT APPLICATION

(11) **EP 4 027 281 A1**
(43) Date of publication of application: **13.07.2022**
(21) Application number: 22150007.7
(22) Date of filing: 03.01.2022
(51) Int. Cl.: G06Q 10/04, G06Q 50/06, H02J 3/00, H02J 3/38

(54) **ENERGY MANAGING APPARATUS AND ENERGY MANAGEMENT METHOD**

(30) Priority: 07.01.2021 JP 2021001555
(71) Applicant: Hitachi, Ltd., Tokyo 100-8280 (JP)
(72) Inventor: MORIMOTO, Yoshitaka, Tokyo, 100-8280 (JP); ISHIKAWA, Takao, Tokyo, 100-8280 (JP); TAKAMATSU, Daikoh, Tokyo, 100-8280 (JP); SHIRAKAWA, Yuzo, Tokyo, 100-8280 (JP)
(74) Representative: MERH-IP Matias Erny Reichl Hoffmann Patentanwälte PartG mbB

(57) **Abstract**

An energy managing apparatus (9) and an energy management method that suppress the fuel consumption amount of fuel cells while satisfying demand not only for electricity and heat, but for high-purity hydrogen to be used for hydrogen vehicles (7) is provided.

An energy demand input section (12a) that accepts data related to demand for three types of energy which are electricity, heat, and high-purity hydrogen; a cell characteristics storage section (13d) that stores relations of amounts of production of the three types of energy relative to a fuel utilization rate of a fuel cell; a fuel utilization rate identifying section (13e) that identifies a largest value of the fuel utilization rate that satisfies the demand for the three types of energy; and a control signal output section (14a) that outputs a control signal about an identified fuel utilization rate to the fuel cell are included.

## Description

### BACKGROUND OF THE INVENTION

### 1. Field of the Invention

The present invention relates to an energy managing apparatus and an energy management method.

### 2. Description of the Related Art

There are known technologies for optimizing the demand and supply of energy. For example, JP-2003-216697-A discloses a system that manages at least one type of energy, electricity or heat, in a subject area, predicts the demand for energy on the basis of an energy consumption record, predicts the supply of energy on the basis of an energy supply record, and creates a running plan suited for the demand prediction and the supply prediction.

In the technology disclosed in JP-2003-216697-A, the supply and demand status of energy of electricity and heat is taken into consideration for management, but other energy is not taken into consideration.

An object of the present invention is to provide an energy managing apparatus and an energy management method that suppress the fuel consumption amount of fuel cells while satisfying the demand not only for electricity and heat, but for high-purity hydrogen used for hydrogen vehicles.

### SUMMARY OF THE INVENTION

In order to solve the problem described above, the present invention includes: an energy demand input section that accepts data related to demand for three types of energy which are electricity, heat, and high-purity hydrogen; a cell characteristics storage section that stores relations of amounts of production of the three types of energy relative to a fuel utilization rate of a fuel cell; a fuel utilization rate identifying section that identifies a largest value of the fuel utilization rate that satisfies the demand for the three types of energy; and/or a control signal output section that outputs a control signal about an identified fuel utilization rate to the fuel cell.

The present invention can provide an energy managing apparatus and an energy management method that suppress the fuel consumption amount of fuel cells while satisfying the demand not only for electricity and heat, but for high-purity hydrogen used for hydrogen vehicles.

### BRIEF DESCRIPTION OF THE DRAWINGS

FIG. 1 is an overall configuration diagram of an energy distribution system according to an embodiment of the present invention;
FIG. 2 is a bird's eye view depicting an example of the arrangement of a station of hydrogen railroad vehicles and buildings in a town;
FIG. 3 is a functional block diagram depicting the configuration of an energy managing apparatus according to the embodiment of the present invention;
FIG. 4 is a graph depicting a prediction of temporal changes in the demand for electricity of the town on one day in September;
FIG. 5 is a graph depicting a prediction of temporal changes in the demand for heat of the town on one day in September;
FIG. 6 is an operation timetable of hydrogen railroad vehicles that run through station a of the town;
FIG. 7 is a graph depicting a prediction of temporal changes in the hydrogen remaining amounts in tanks of railroad vehicles in a case where the railroad vehicles run according to the operation timetable;
FIG. 8 is a graph depicting temporal changes in the power generation amount of wind power generation which is renewable energy generation;
FIG. 9 is a graph depicting temporal changes in the generation amount of by-product hydrogen at a factory, and the used amount (at the factory);
FIG. 10 is a graph depicting relations of the amounts of production of three types of energy relative to the fuel utilization rate of an engine-SOFC according to the embodiment of the present invention;
FIG. 11 is a flowchart depicting a method of identifying a fuel utilization rate;
FIG. 12 depicts a mathematical optimization flow to be used when a purchase allocation deciding section decides the purchase amount of each fuel;
FIG. 13 is graphs of the predictions of the temporal changes in the energy demand depicted in FIG. 4, FIG. 5, and FIG. 7, in which predicted values of 11:00 are highlighted;
FIG. 14 is a graph depicting temporal changes in the supply amount of hydrogen derived from renewable energy (wind power), in which a value of 10:00 is highlighted;
FIG. 15 is a graph depicting temporal changes in the selling price of hydrogen derived from renewable energy (wind power), in which a value of 10:00 is highlighted;
FIG. 16 is a graph depicting temporal changes in the supply amount of by-product hydrogen, in which a value of 10:00 is highlighted;
FIG. 17 is a graph depicting temporal changes in the selling price of by-product hydrogen, in which a value of 10:00 is highlighted;
FIG. 18 is a graph depicting wind power generation amounts and a prediction of the selling price of power for a system for different time periods, to which purchase timing signals are added; and
FIG. 19 is a graph depicting only time periods which are included in the prediction of the selling price of hydrogen derived from renewable energy (wind power) depicted in FIG. 15, and in which the selling price is equal to or lower than a price at which an electricity-gas company wishes to purchase hydrogen derived from renewable energy.

### DESCRIPTION OF THE PREFERRED EMBODIMENTS

Hereinafter, an embodiment of the present invention is explained with reference to the figures.

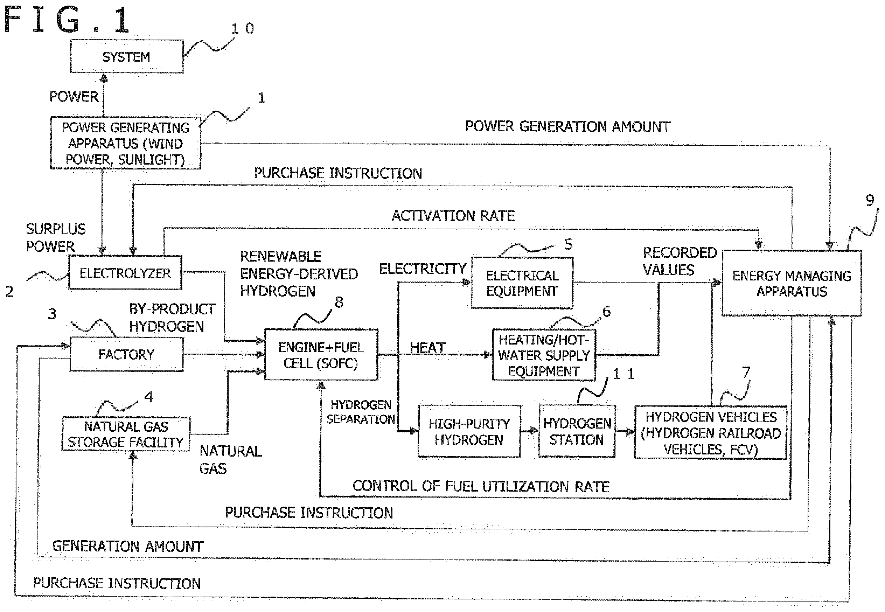

FIG. 1 is an overall configuration diagram of an energy distribution system according to the present embodiment. As depicted in FIG. 1, the energy distribution system according to the present embodiment includes: a power generating apparatus 1 which is a facility of a renewable energy power generation company; an electrolyzer 2 that manufactures hydrogen by electrolyzing water by using surplus power of renewable energy; a factory 3 having a facility where hydrogen is generated secondarily; a natural gas storage facility 4 that supplies natural gas to a gas pipeline; electrical equipment 5 and heating/hot-water supply equipment 6 of consumers including a municipality, private enterprises, and the like; hydrogen vehicles 7 such as hydrogen railroad vehicles or fuel cell vehicles (FCV); an engine solid oxide fuel cell (SOFC) 8 and an energy managing apparatus 9 which are facilities of an electricity-gas company; and the like.

The renewable energy power generation company sells, to a system 10 such as a power company, power generated by using renewable energy such as wind power or sunlight, and sells surplus power to other companies such as a hydrogen manufacturer company. The hydrogen manufacturer company sells hydrogen manufactured by using the electrolyzer 2 to the electricity-gas company. The electricity-gas company purchases renewable energy-derived hydrogen from the hydrogen manufacturer company, and also purchases fuels such as by-product hydrogen from the factory 3 or natural gas. The electricity-gas company supplies the electrical equipment 5, the heating/hot-water supply equipment 6, and the hydrogen vehicles 7 with three types of energy which are electricity, heat, and high-purity hydrogen (hydrogen with purity equal to or higher than 99.99%) that are produced by the engine-SOFC 8. Note that renewable energy-derived hydrogen and by-product hydrogen are also supplied to the engine-SOFC 8 by using the gas pipeline for natural gas laid from the natural gas storage facility 4, but the maximum hydrogen mixing ratio (to natural gas) in the gas pipelines is restricted to 20%. Whereas it is supposed in the present embodiment that natural gas and hydrogen are mixed in the common gas pipeline in this manner, a gas pipeline dedicated for hydrogen may be laid.

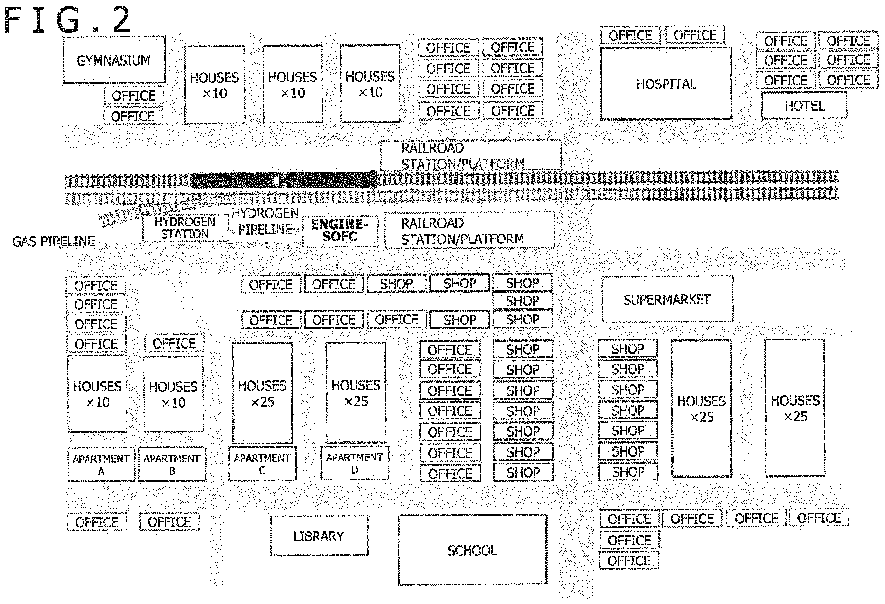

FIG. 2 is a bird's eye view depicting an example of the arrangement of a station of hydrogen railroad vehicles and buildings in a town. As depicted in FIG. 2, the hydrogen railroad vehicles (four trains of two-car formation) run through the middle of the town. The engine-SOFC 8 is installed in the site of the station, and this engine-SOFC 8 uses fuels supplied through the gas pipeline to produce electricity, heat, and, high-purity hydrogen. Among them, high-purity hydrogen is sent from the engine-SOFC 8 to a hydrogen station 11 via a hydrogen pipeline, and is stored in a high pressure storage of the hydrogen station 11. Note that the station (station a) in the town is the first station of a section of a route with a length of 120 km (average inter-station distance: 10 km), and in the section, the hydrogen railroad vehicles can be filled with hydrogen only at the hydrogen station 11 installed at the site of the station.

The engine-SOFC 8 includes a hybrid of engine generators and solid oxide fuel cells (SOFC), and heat generated in the engine generators is used effectively at the SOFC that operate at high temperature. When renewable energy-derived hydrogen, by-product hydrogen, and natural gas are supplied to the SOFC 8 as fuels, electricity and heat are generated, and also, in addition to hydrogen, an unused fuel including carbon dioxide, carbon monoxide, and the like is generated. The electricity-gas company separates, and stores high-purity hydrogen by collecting carbon dioxide or the like included in the unused fuel. In the engine-SOFC 8 according to the present embodiment, the output power and power generation efficiency of an engine generator are 500 kW and 50%, respectively, and the output power and power generation efficiency of an SOFC are 300 kW and 95%, respectively. The overall efficiency is 85%, this combination forms one unit, and 16 units are installed.

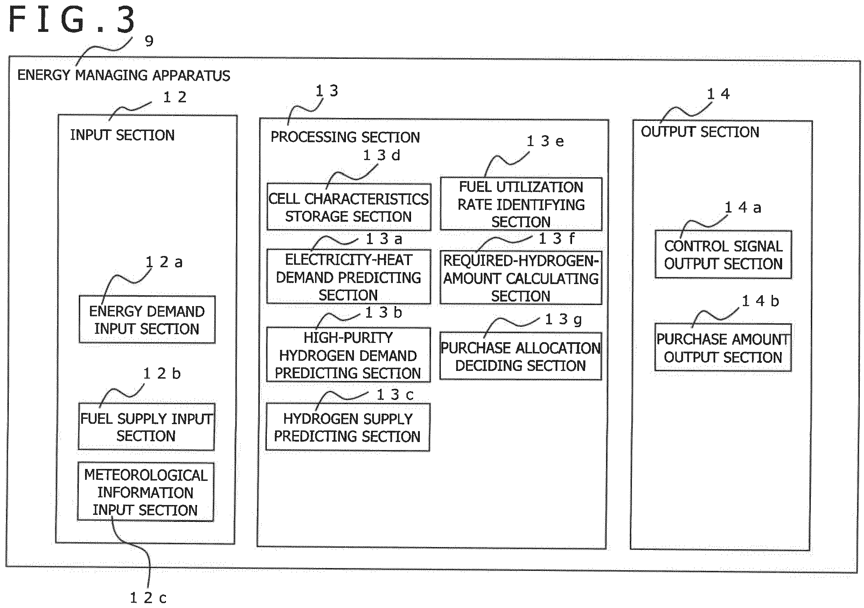

Next, the energy managing apparatus 9 that controls the fuel utilization rate of the engine-SOFC 8 is explained. FIG. 3 is a functional block diagram depicting the configuration of the energy managing apparatus 9 according to the present embodiment. As depicted in FIG. 3, the energy managing apparatus 9 includes an input section 12, a processing section 13, and an output section 14.

The input section 12 includes an energy demand input section 12a, a fuel supply input section 12b, and a meteorological information input section 12c. The energy demand input section 12a is configured to accept data related to the demand for three types of energy which are electricity, heat, and high-purity hydrogen, and, for example, receives record data of the amount of electricity consumed at the electrical equipment 5, the amount of heat consumed at the heating/hot-water supply equipment 6, and the amount of high-purity hydrogen consumed at the hydrogen vehicles 7 (the hydrogen station 11). The fuel supply input section 12b is configured to accept data related to the supply status of renewable energy-derived hydrogen, by-product hydrogen, and natural gas, and in a case where the supply amounts of these fuels cannot be received directly, receives, in real time, data such as the amount of power generation by renewable energy, the activation rate of the electrolyzer 2, or the generation amount of by-product hydrogen at the factory 3 which are correlated with the supply amounts of these fuels. The meteorological information input section 12c is configured to accept meteorological data such as weather or seasons that can influence the power generation amounts of wind power, sunlight, and the like.

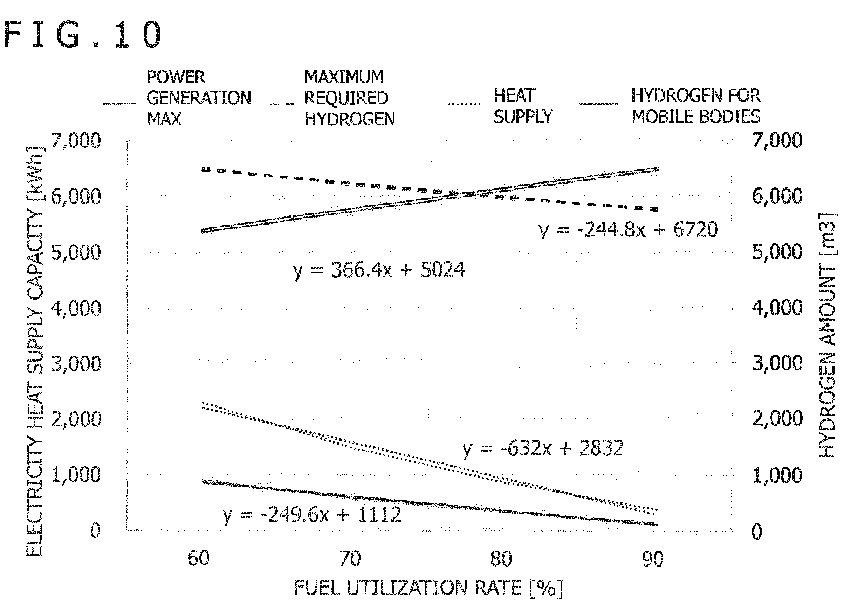

The processing section 13 includes an electricity-heat demand predicting section 13a, a high-purity hydrogen demand predicting section 13b, a hydrogen supply predicting section 13c, a cell characteristics storage section 13d, a fuel utilization rate identifying section 13e, a required-hydrogen-amount calculating section 13f, and a purchase allocation deciding section 13g. The electricity-heat demand predicting section 13a is configured to predict the future demand for electricity and heat on the basis of the consumption record data of electricity and heat accepted by the energy demand input section 12a. The high-purity hydrogen demand predicting section 13b is configured to predict the future demand for high-purity hydrogen on the basis of the consumption record data of high-purity hydrogen accepted by the energy demand input section 12a. The hydrogen supply predicting section 13c is configured to predict the future supplies of renewable energy-derived hydrogen and by-product hydrogen on the basis of the data accepted by the fuel supply input section 12b, and the data accepted by the meteorological information input section 12c. The cell characteristics storage section 13d is configured to store in advance relations (see FIG. 10 mentioned below) of the amounts of production of the three types of energy relative to the fuel utilization rate of the engine-SOFC 8. The fuel utilization rate identifying section 13e identifies the largest value (the value with which a required hydrogen amount is minimized) of fuel utilization rates that satisfy the entire demand for the three types of energy. Here, the largest value is not limit to the largest value itself, but values within 10% from the upper limit of the range of fuel utilization rates that satisfy the entire demand for the three types of energy are also regarded as substantially largest values. The required-hydrogen-amount calculating section 13f is configured to calculate the amount of hydrogen required for the identified fuel utilization rate, and in the case of the engine-SOFC 8 according to the present embodiment, the required hydrogen amount (m3) is calculated according to the conversion formula, -24.48 × (fuel utilization rate) + 7944. The purchase allocation deciding section 13g is configured to decide the purchase amount of each fuel on the basis of the amount of hydrogen predicted to be required in the future, and the current or future supply status of the fuel, and a specific decision method is mentioned below.

The output section 14 includes a control signal output section 14a and a purchase amount output section 14b. The control signal output section 14a is configured to output, to the engine-SOFC 8, a control signal about a fuel utilization rate identified by the fuel utilization rate identifying section 13e for each predetermined time period. The purchase amount output section 14b is configured to output the purchase amount of each fuel decided by the purchase allocation deciding section 13g for each predetermined time period, and prompt to purchase the fuel.

A specific example for efficiently running the engine-SOFC 8 on the basis of the demand status of the three types of energy and the supply status of each fuel in the town explained with reference to FIG. 2 is explained below.

First, data about demand accepted by the energy demand input section 12a is mentioned.

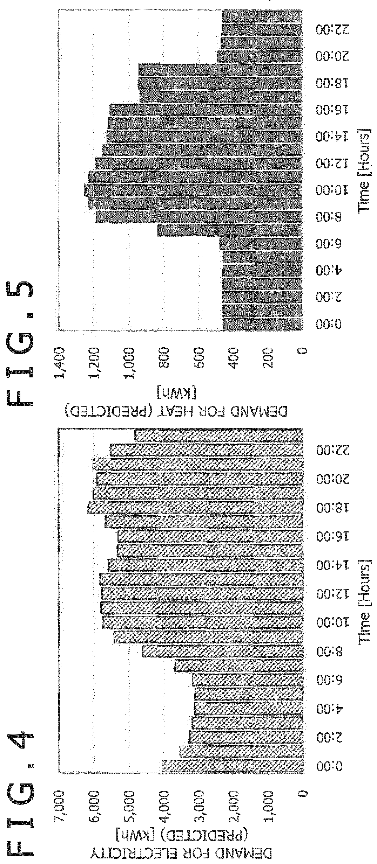

FIG. 4 is a graph depicting a prediction of temporal changes in the demand for electricity of the town on one day in September, and FIG. 5 is a graph depicting a prediction of temporal changes in the demand for heat of the town on one day in September. The precision of the demand for electricity, and the demand for heat predicted by the electricity-heat demand predicting section 13a can be enhanced by feeding back consumption record data about electricity and heat accepted by the energy demand input section 12a.

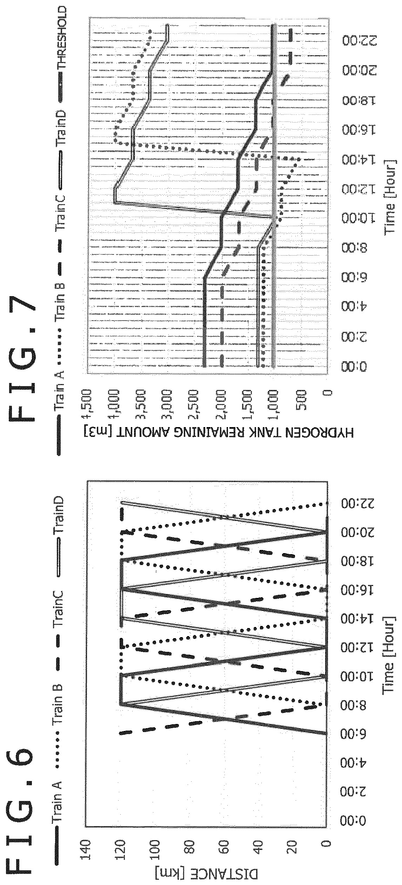

FIG. 6 is an operation timetable of the hydrogen railroad vehicles that run through station a of the town. As depicted in FIG. 6, the hydrogen railroad vehicles run to make round trips in a section with a length of 120 km between station a which is at the position of distance of zero, and station b which is at a position of distance of 120 km at a schedule speed which is 60 km/h. Running intervals of the hydrogen railroad vehicles are two hours, and four railroad vehicles of two-car formation (Train A to Train D), which means the total of eight cars, are running. It is supposed that Train A and Train B depart from station a every day, and Train C and Train D depart from station b every day. The first trains depart at 6:00, the last trains depart at 20:00, and each train of two-car formation make two round trips in the section every day.

FIG. 7 is a graph depicting a prediction of temporal changes in the hydrogen remaining amounts in tanks of railroad vehicles in a case where the railroad vehicles run according to the operation timetable. It is supposed that the capacity of the tank mounted on each railroad vehicle, or each train, is 2000 m3 per car, and the total capacity of the tank for two cars is 4000 m3. In addition, it is supposed that the power consumption required for one car to run 1 km is 2 kWh/km, and the amount of high-purity hydrogen consumed by a railroad vehicle fuel cell (efficiency: 50%) for generating the power is 1.33 m3/km. Furthermore, a threshold is set to the hydrogen remaining amount of 1000 m3 in tanks per train, and a train with the hydrogen remaining amount equal to or smaller than 1000 m3 at the time point of arrival at station a is filled with high-purity hydrogen from the hydrogen station 11. As depicted in FIG. 7, for example, at the time point when Train D arrives at station a at 10:00 after departing from station b at 8:00, the hydrogen remaining amount per train in the tanks is 980 m3, which is smaller than the threshold, 1000 m3, and thus Train D is filled with 3020 m3 of high-purity hydrogen at the hydrogen station 11 at station a, and the tanks are full, and have 4000 m3 of high-purity hydrogen. Note that the hydrogen station 11 at station a can store 6000 m3 of high-purity hydrogen. In a case where high-purity hydrogen is consumed by the railroad vehicles in this manner, the high-purity hydrogen demand predicting section 13b can highly precisely predict the demand for high-purity hydrogen on the basis of an operation plan of the railroad vehicles.

Next, data about supply status accepted by the fuel supply input section 12b of the energy managing apparatus 9 is mentioned.

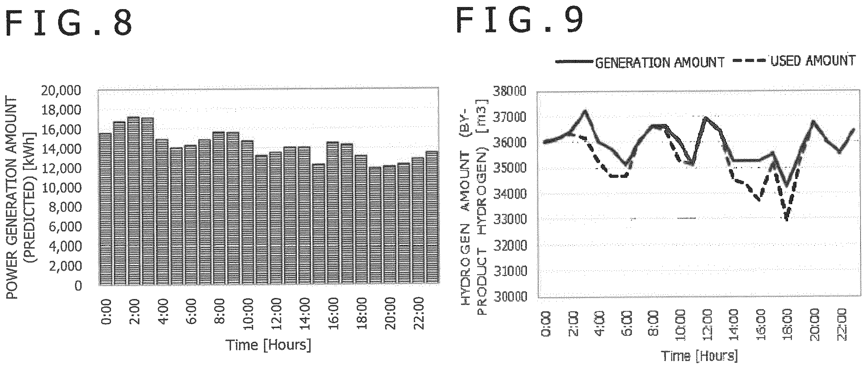

FIG. 8 is a graph depicting temporal changes in the power generation amount of wind power generation which is renewable energy generation. It is supposed that the power generating apparatus 1 owned by the renewable energy power generation company has five windmills each with 8 MW, and the average activation rate is 35%. Note that data about the power generation amount may be predicted values predicted on the basis of a power generation plan or may be recorded values based on power that has been generated actually. If the power generation amount of renewable energy can be known in this manner, it becomes possible for the hydrogen supply predicting section 13c to predict also the supply amount of renewable energy-derived hydrogen to some extent. Whereas the power generation amount of wind power generation is mentioned in the example here, the supply amount of renewable energy-derived hydrogen can be predicted also by using the power generation amount of other renewable energy such as sunlight, the activation rate of the electrolyzer 2 owned by the hydrogen manufacturer company, or the like.

FIG. 9 is a graph depicting temporal changes in the generation amount of by-product hydrogen at a factory 3 in the steel industry or the like, and the used amount (at the factory 3). The amount of by-product hydrogen that can be supplied to the outside such as the electricity-gas company is a surplus amount, that is, (generation amount) - (used amount). Note that data about the generation amount and the used amount may be predicted values predicted on the basis of an execution plan of the factory 3 or may be recorded values based on by-product hydrogen that has been actually generated and used. If the generation amount of by-product hydrogen at the factory 3 can be known in this manner, it becomes possible for the hydrogen supply predicting section 13c to predict also the supply amount of by-product hydrogen supplied to the engine-SOFC 8 of the electricity-gas company. Whereas by-product hydrogen is used also at the factory 3 in the example here, in a case where by-product hydrogen is not used at the factory 3, the amount of supply to the engine-SOFC 8 can be predicted if the generation amount of by-product hydrogen at the factory 3 can be known. Note that natural gas is a rich fossil fuel, and a sufficient supply amount of natural gas can be expected at any time.

Next, processes at the processing section 13 of the energy managing apparatus 9 according to the present embodiment are mentioned.

FIG. 10 is a graph depicting relations of the amounts of production of the three types of energy relative to the fuel utilization rate of the engine-SOFC 8 according to the present embodiment. Formulae of linear functions depicted in the graph are approximations determined according to the least-squares method. As depicted in FIG. 10, the fuel utilization rate of the engine-SOFC 8 is variable within the range of 60 to 90%, and the amounts of electricity, heat, and high-purity hydrogen that can be produced change according to the fuel utilization rate. Certainly, the amount (here the required amount of hydrogen) of a fuel consumed by the engine-SOFC 8 also changes according to the fuel utilization rate. In view of this, the fuel utilization rate identifying section 13e according to the present embodiment identifies such a fuel utilization rate that the demand for the three types of energy is satisfied, and also the consumption of hydrogen which is a fuel can be small.

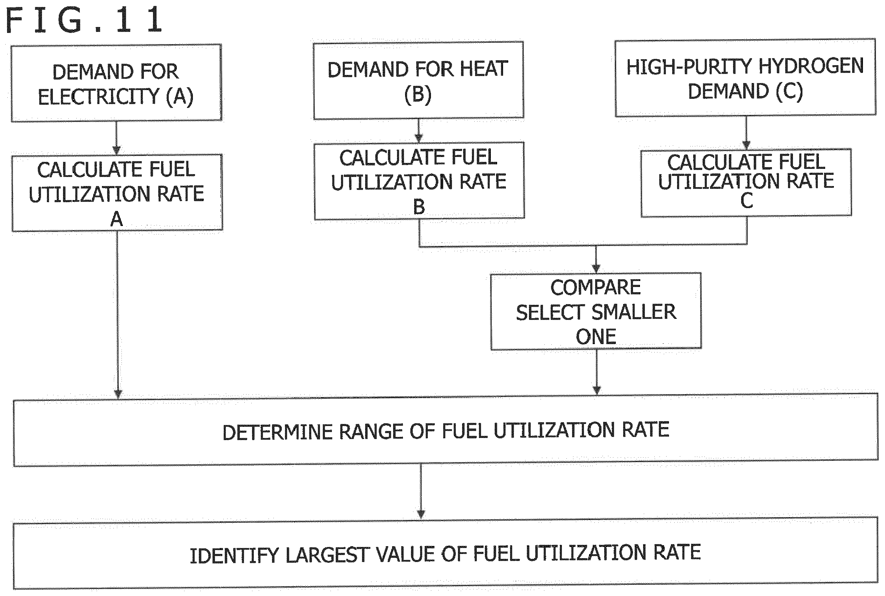

FIG. 11 is a flowchart depicting a method of identifying a fuel utilization rate. First, the electricity-heat demand predicting section 13a predicts the demand for electricity (A) and the demand for heat (B) at a certain time, and the high-purity hydrogen demand predicting section 13b predicts the high-purity hydrogen demand (C) at the certain time. Next, the fuel utilization rate identifying section 13e refers to the relations that are stored in the cell characteristics storage section 13d, and are depicted in FIG. 10, and calculates a fuel utilization rate A that satisfies the demand for electricity (A), a fuel utilization rate B that satisfies the demand for heat (B), and a fuel utilization rate C that satisfies the high-purity hydrogen demand (C).

Here, the amounts of production of heat and high-purity hydrogen increase as the fuel utilization rate lowers (the approximations are linear functions with negative inclinations as depicted in FIG. 10). Because of this, the fuel utilization rate identifying section 13e compares the fuel utilization rate B with the fuel utilization rate C, and selects a smaller fuel utilization rate to thereby satisfy both the demand for heat (B) and the high-purity hydrogen demand (C). Furthermore, the fuel utilization rate identifying section 13e decides the range of the fuel utilization rate on the basis of the selected fuel utilization rate, and the fuel utilization rate A, and identifies such a value within the range that the required hydrogen amount is minimized, that is, the largest value of the fuel utilization rate.

If the required amount of hydrogen for a certain future time is determined in this manner, next the purchase allocation deciding section 13g decides from where and at which ratio the amount of hydrogen will be procured. Choices of hydrogen in a case where hydrogen is to be procured as a fuel include three types of hydrogen which are natural gas, renewable energy-derived hydrogen, and by-product hydrogen. In view of this, by using a mathematical optimization method, the purchase allocation deciding section 13g decides a combination that minimizes the cost which is the total of (price of natural gas) × amount, (price of renewable energy-derived hydrogen) × amount, and (price of by-product hydrogen) × amount. At this time, the price and suppliable amount of each fuel vary from moment to moment depending on the amount of power generation by renewable energy, the generation amount of by-product hydrogen at the factory 3, and the like, and thus supply predictions by the hydrogen supply predicting section 13c are used in the optimization at the purchase allocation deciding section 13g.

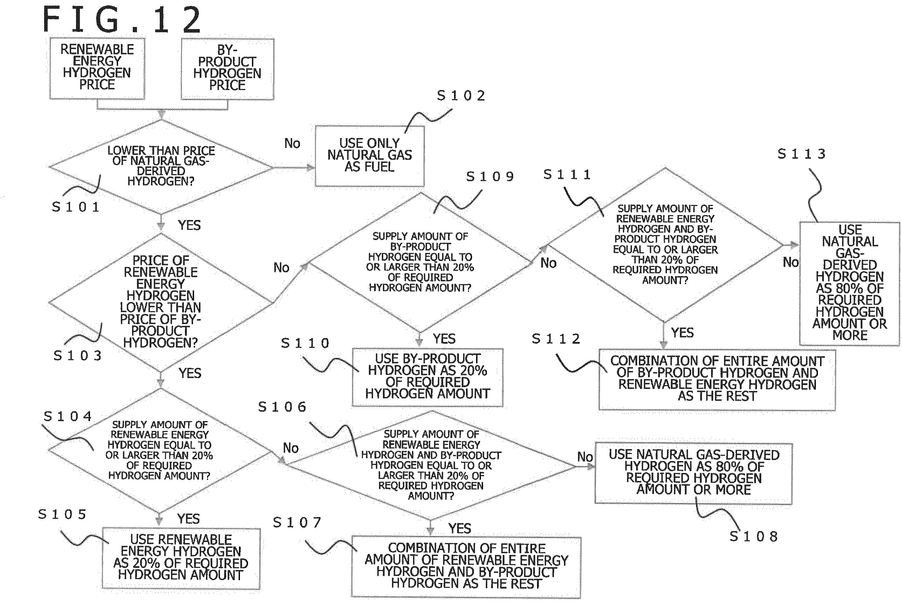

FIG. 12 depicts a mathematical optimization flow to be used when the purchase allocation deciding section 13g decides the purchase amount of each fuel. As depicted in FIG. 12, first, the purchase allocation deciding section 13g decides whether or not either the price of renewable energy-derived hydrogen (renewable energy hydrogen) or the price of by-product hydrogen is lower than the price of natural gas (Step S101). In a case where the prices of both renewable energy-derived hydrogen and by-product hydrogen are higher than the price of natural gas, the purchase allocation deciding section 13g allocates 100% of a required hydrogen amount to the purchase amount of natural gas (Step S102). In a case where either the price of renewable energy-derived hydrogen or the price of by-product hydrogen is lower than the price of natural gas at Step S101, the purchase allocation deciding section 13g decides whether or not the price of renewable energy-derived hydrogen is lower than the price of by-product hydrogen (Step S103). In a case where the price of renewable energy-derived hydrogen is lower than the price of by-product hydrogen, the purchase allocation deciding section 13g decides whether or not the supply amount of renewable energy-derived hydrogen is equal to or larger than 20% of the required hydrogen amount (Step S104). In a case where the supply amount of renewable energy-derived hydrogen is equal to or larger than 20% of the required hydrogen amount, the purchase allocation deciding section 13g allocates 20%, which is the upper limit of the maximum hydrogen mixing ratio in the gas pipeline, to the purchase amount of renewable energy-derived hydrogen (Step S105).

On the other hand, in a case where the supply amount of renewable energy-derived hydrogen is smaller than 20% of the required hydrogen amount at Step S104, the purchase allocation deciding section 13g decides whether or not the total of the supply amount of renewable energy-derived hydrogen and the supply amount of by-product hydrogen is equal to or larger than 20% of the required hydrogen amount (Step S106). In a case where the total is equal to or larger than 20% of the required hydrogen amount, the purchase allocation deciding section 13g makes the allocation such that the entire supply amount of renewable energy-derived hydrogen and part of the supply amount of by-product hydrogen are purchased to make up 20% of the required hydrogen amount (Step S107). In addition, in a case where the total is smaller than 20% of the required hydrogen amount at Step S106, the purchase allocation deciding section 13g makes the allocation such that the entire supply amount of renewable energy-derived hydrogen and the entire supply amount of by-product hydrogen are purchased, and natural gas is purchased to make up remaining 80% of hydrogen or more (Step S108).

In a case where the price of by-product hydrogen is lower than the price of renewable energy-derived hydrogen at Step S103, the purchase allocation deciding section 13g decides whether or not the supply amount of by-product hydrogen is equal to or larger than 20% of the required hydrogen amount (Step S109). In a case where the supply amount of by-product hydrogen is equal to or larger than 20% of the required hydrogen amount, the purchase allocation deciding section 13g allocates 20%, which is the upper limit of the maximum hydrogen mixing ratio in the gas pipeline, to the purchase amount of by-product hydrogen (Step S110). In a case where the supply amount of by-product hydrogen is smaller than 20% of the required hydrogen amount at Step S109, the purchase allocation deciding section 13g decides whether or not the total of the supply amount of renewable energy-derived hydrogen and the supply amount of by-product hydrogen is equal to or larger than 20% of the required hydrogen amount (Step Sill). In a case where the total is equal to or larger than 20% of the required hydrogen amount, the purchase allocation deciding section 13g makes the allocation such that the entire supply amount of by-product hydrogen and part of the supply amount of renewable energy-derived hydrogen are purchased to make up 20% of the required hydrogen amount (Step S112). In addition, in a case where the total is smaller than 20% of the required hydrogen amount at Step Sill, the purchase allocation deciding section 13g makes the allocation such that the entire supply amount of renewable energy-derived hydrogen and the entire supply amount of by-product hydrogen are purchased, and natural gas is purchased to make up remaining 80% of hydrogen or more (Step S113).

After a combination of fuels is decided in this manner, the purchase amount output section 14b outputs a signal for instructions of the purchase amounts and purchase time of natural gas, renewable energy-derived hydrogen, and by-product hydrogen to the outside such as a terminal of the electricity-gas company for each predetermined time period. In addition, the control signal output section 14a also outputs, as a control signal, the fuel utilization rate identified by the fuel utilization rate identifying section 13e to the engine-SOFC 8 of the electricity-gas company for each predetermined time period.

Next, as an example, a method of optimizing the fuel cost for demand predictions of the three types of energy at 11:00 in the town explained with reference to FIG. 2 is explained.

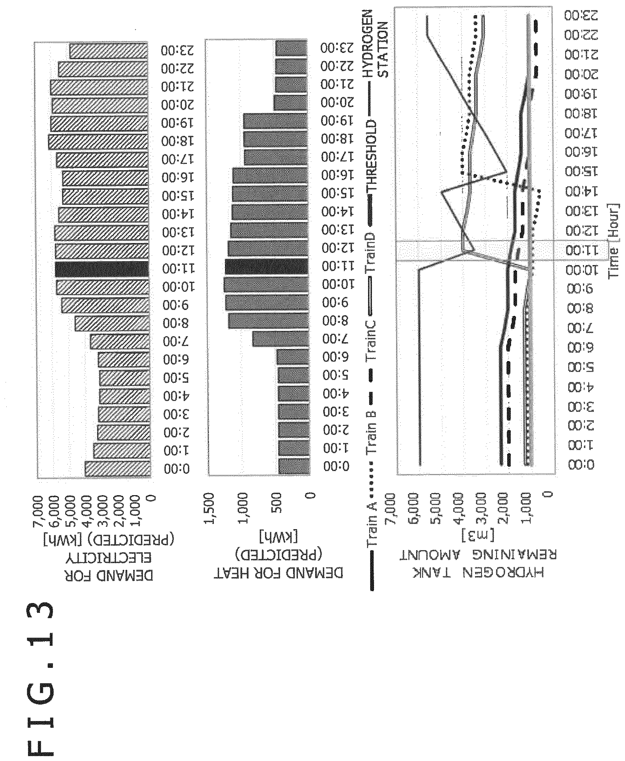

FIG. 13 is graphs of the predictions of the temporal changes in the energy demand depicted in FIG. 4, FIG. 5, and FIG. 7, in which predicted values of 11:00 are highlighted. As depicted in FIG. 13, the demand for electricity is 5777 kWh, the demand for heat is 1187 kWh, and the high-purity hydrogen demand is approximately 500 m3/h considering the hydrogen remaining amount at the hydrogen station 11. If these values are assigned to the approximations depicted in FIG. 10, the optimal solution of the fuel utilization rate related to the demand for electricity is 70%, the optimal solution of the fuel utilization rate related to the demand for heat is 76%, and the optimal solution of the fuel utilization rate related to the high-purity hydrogen demand is 75%. Accordingly, the range of the fuel utilization rates is 70% to 75%, and the corresponding range of a required hydrogen amount is 6108 m3 (when the fuel utilization rate is 75%) to 6230 m3 (when the fuel utilization rate is 70%). Since the fuel cost can be reduced if the required hydrogen amount is small, such a combination of fuels (natural gas, renewable energy-derived hydrogen, and by-product hydrogen) that the hydrogen amount of 6108 m3 can be ensured, and the fuel cost is minimized is decided by the following method.

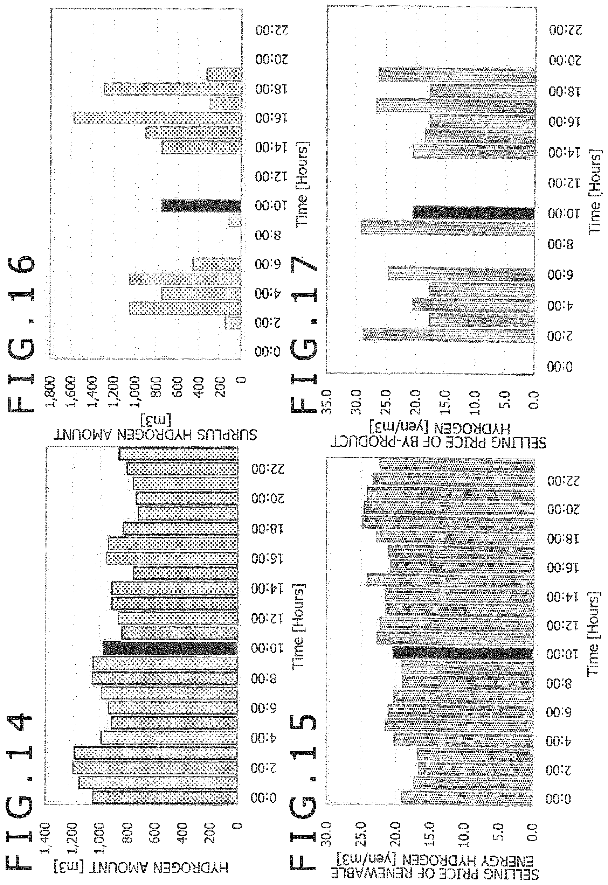

It is supposed that in order to satisfy the demand for the three types of energy of the town at 11:00, taking power selling transactions, hydrogen manufacturing by water electrolysis, and transportation time through the gas pipeline into consideration, the electricity-gas company purchases each fuel at 10:00 which is one hour earlier. FIG. 14 is a graph depicting temporal changes in the supply amount of hydrogen derived from renewable energy (wind power), in which a value of 10:00 is highlighted, and FIG. 15 is a graph depicting temporal changes in the selling price of hydrogen derived from renewable energy (wind power), in which a value of 10:00 is highlighted. In addition, FIG. 16 is a graph depicting temporal changes in the supply amount of by-product hydrogen, in which a value of 10:00 is highlighted, and FIG. 17 is a graph depicting temporal changes in the selling price of by-product hydrogen, in which a value of 10:00 is highlighted. As depicted in FIG. 14 and FIG. 15, the supply amount and selling price of renewable energy-derived hydrogen at 10:00 are 975 m3 and 20.4 yen/m3, respectively, and as depicted in FIG. 16 and FIG. 17, the supply amount and selling price of by-product hydrogen at 10:00 are 750 m3 and 20.5 yen/m3.

Note that it is supposed that the supply amount of natural gas is ∞ because it is a rich fossil fuel, and the selling price of natural gas is 60 yen/m3. Here, since the three times the amount of hydrogen can be obtained from methane (CH4), which is a principal component of natural gas, due to the reaction of CH4 + H2O → 3H2 + CO, this means that hydrogen can be substantially procured at 20 yen/m3 in a case where natural gas is decided as a fuel. It should be noted however that in a case where a carbon tax of 2 yen/m3 is imposed on the selling price of natural gas, natural gas-derived hydrogen can be purchased at 20.7 yen/m3.

Here, the price of each fuel at 10:00 is applied to the mathematical optimization flow in FIG. 12. First, at Step S101 in FIG. 12, the price of renewable energy-derived hydrogen which is 20.4 yen/m3 and the price of by-product hydrogen which is 20.5 yen/m3 are both lower than the reference price of natural gas which is 20.7 yen/m3, and thus the process proceeds to Step S103. Next, at Step S103, the price of renewable energy-derived hydrogen which is 20.4 yen/m3 is lower than the price of by-product hydrogen which is 20.5 yen/m3, and thus the process proceeds to Step S104. At Step S104, the supply amount of renewable energy-derived hydrogen which is 975 m3 is smaller than 1222 m3, which is 20% of the required hydrogen amount at 11:00 which is 6108 m3, and thus the process proceeds to Step S106. At Step S106, the total (1725 m3) of the supply amount of renewable energy-derived hydrogen which is 975 m3, and the supply amount of by-product hydrogen which is 750 m3 is larger than 1222 m3 which is 20% of the required hydrogen amount, and thus the process proceeds to Step S107. Then, at Step S107, 20% of the required hydrogen amount is allocated to the entire supply amount of renewable energy-derived hydrogen which is 975 m3, and part of the supply amount of by-product hydrogen which part is 247 m3. That is, as a combination of fuels that should be purchased at 10:00, natural gas is procured as 80% of the required hydrogen amount, and in remaining 20%, renewable energy-derived hydrogen is procured as 16%, and by-product hydrogen is procured as 4%. This can minimize the cost.

Next, signals to be output by the output section 14 of the energy managing apparatus 9 are mentioned.

The control signal output section 14a outputs, to the engine-SOFC 8, a control signal about the fuel utilization rate of 75% for a time period 11:00 to 12:00, for example. At this time, the control signal output section 14a may output information that the hydrogen mixing ratio is 20% or may output a heat-electricity ratio instead of the fuel utilization rate. In addition, as fuels that are required when running the engine-SOFC 8 at the fuel utilization rate of 75% at 11:00, the purchase amount output section 14b outputs, to a terminal of the electricity-gas company or the like, information that 975 m3 of renewable energy-derived hydrogen, and 247 m3 of by-product hydrogen should be purchased at the time point of 10:00. Since data to be accepted by the input section 12 of the energy managing apparatus 9 varies from moment to moment actually, signals output by the output section 14 of the energy managing apparatus 9 also vary from moment to moment.

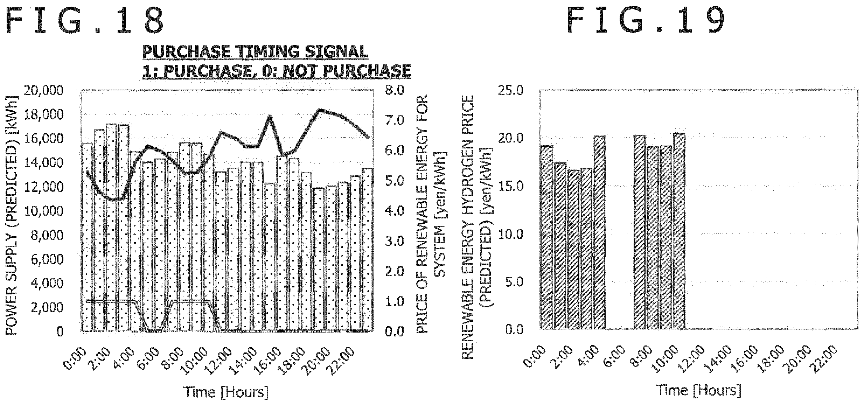

FIG. 18 is a graph depicting wind power generation amounts and a prediction of the selling price of power for a system for different time periods, to which purchase timing signals are added. If meteorological data of record data of power generation amounts is accumulated, and the prediction precision of power generation amounts is enhanced, it becomes possible to similarly predict the selling price of power for the system 10 also. It is supposed in the present embodiment that the hydrogen manufacturer company wishes to purchase surplus power at the price equal to or lower than 6.6 yen/kWh from the renewable energy power generation company, and the purchase price is set 10% higher than the selling price of power for the system 10. Accordingly, a time period in which the selling price of power for the system 10 is 6.0 yen/kWh is a desirable purchase timing for the hydrogen manufacturer company. Because of this, by outputting a purchase timing signal to a terminal of the hydrogen manufacturer company as in FIG. 18, it becomes possible to recognize at a glance in advance in which time period power should be purchased.

FIG. 19 is a graph depicting only time periods which are included in the prediction of the selling price of hydrogen derived from renewable energy (wind power) depicted in FIG. 15, and in which the selling price is equal to or lower than a price at which the electricity-gas company wishes to purchase hydrogen derived from renewable energy. FIG. 19 represents a case where the selling price of renewable energy-derived hydrogen is lower than the reference price which is 20.7 yen/m3 in a case where hydrogen is obtained from natural gas with small price variations. Because of this, for the electricity-gas company also, this gives an advantage that it is made easier to recognize time periods and prices in and at which a fuel for the engine-SOFC 8 should be procured from the hydrogen manufacturer.

## Claims

1. An energy managing apparatus (9) comprising:
an energy demand input section (12a) that accepts data related to demand for three types of energy which are electricity, heat, and high-purity hydrogen;
a cell characteristics storage section (13d) that stores relations of amounts of production of the three types of energy relative to a fuel utilization rate of a fuel cell;
a fuel utilization rate identifying section (13e) that identifies a largest value of the fuel utilization rate that satisfies the demand for the three types of energy; and
a control signal output section (14a) that outputs a control signal about an identified fuel utilization rate to the fuel cell.

2. The energy managing apparatus (9) according to claim 1, wherein
the fuel cell is a solid oxide fuel cell, and uses, as fuels, renewable energy-derived hydrogen, by-product hydrogen, and natural gas.

3. The energy managing apparatus (9) according to claim 2, further comprising:
a required-hydrogen-amount calculating section (13f) that calculates an amount of hydrogen required for an identified fuel utilization rate;
a fuel supply input section (12b) that accepts data related to supply status of the renewable energy-derived hydrogen, the by-product hydrogen, and the natural gas;
a purchase allocation deciding section (13g) that decides a purchase amount of each fuel on a basis of a required amount of hydrogen and supply status of each fuel; and
a purchase amount output section (14b) that outputs a decided purchase amount of each fuel.

4. The energy managing apparatus (9) according to claim 3, wherein
the supply status of the renewable energy-derived hydrogen and the by-product hydrogen includes at least one of an amount of power generation by renewable energy, an activation rate of an electrolyzer (2), and a generation amount of by-product hydrogen at a factory (3).

5. The energy managing apparatus (9) according to claim 3, further comprising:
a meteorological information input section (12c) that accepts meteorological data; and
a hydrogen supply predicting section (13c) that predicts future supplies of the renewable energy-derived hydrogen and the by-product hydrogen on a basis of data accepted by the fuel supply input section (12b) and data accepted by the meteorological information input section (12c).

6. The energy managing apparatus (9) according to claim 1, further comprising:
an electricity-heat demand predicting section (13a) that predicts future demand for electricity and heat on a basis of consumption record data of electricity and heat accepted by the energy demand input section (12a).

7. The energy managing apparatus (9) according to claim 1, wherein
the high-purity hydrogen is consumed by a railroad vehicle, and
the energy managing apparatus (9) includes a high-purity hydrogen demand predicting section (13b) that predicts future demand for the high-purity hydrogen on a basis of an operation plan of the railroad vehicle.

8. An energy management method comprising the steps of:
accepting data related to demand for three types of energy which are electricity, heat, and high-purity hydrogen;
identifying a highest fuel utilization rate that satisfies the demand for the three types of energy on a basis of characteristic of a fuel cell; and
outputting a control signal about an identify fuel utilization rate to the fuel cell.
